# EUROPÄISCHE PATENTANMELDUNG

(11) **EP 1 275 443 A2**
(43) Veröffentlichungstag der Anmeldung: **15.01.2003**
(21) Anmeldenummer: 02450148.8
(22) Anmeldetag: 03.07.2002
(51) Int. Cl.: B09B 3/00, B03B 9/06

(54) **Verfahren zum physikalischen und chemischen Behandeln und Auftrennen von Gewerbe- und/ oder Haushaltsabfall**

(30) Priorität: 09.07.2001 AT 10612001
(71) Anmelder: Porr Umwelttechnik GmbH, 1103 Wien (AT)
(72) Erfinder: Paulnsteiner, Robert, 1160 Wien (AT); Stanek, Wolfgang, 2371 Hinterbrühl (AT)
(74) Vertreter: Widtmann, Georg, Dr.

(57) **Zusammenfassung**

Verfahren zum physikalischen und chemischen Behandeln sowie Auftrennen in einzelne Fraktionen von Gewerbe- und/oder Haushaltsabfall, wobei vom Abfall gegebenenfalls eine Grobfraktion abgetrennt, und der Abfall mechanisch zerkleinert wird, wobei vom zerkleinerten Abfall ferro-, dia- und paramagnetische metallische Stoffe, insbesondere mit Magnet- und Wirbelstromabscheider (5), abgeschieden werden, und der Abfall, gegebenenfalls unter Wasser-, Nährstoff- und/oder Mikroorganismenzugabe, einer aeroben Fermentation (7) zugeführt, die fermentierten Abfälle in eine wäßrige Suspension (8) übergeführt, eine aufschwimmbare Leichtfraktion sowie (10) eine sedimentierbare Grobfraktion (11) abgetrennt, von der verbleibenden Suspension Feststoffe abgeschieden und eine fluide, insbesondere eine flüssige, Phase einer anaeroben Fermentation (14) zugeführt wird.

## Beschreibung

Die Erfindung hat ein Verfahren zum physikalischen und chemischen Behandeln und Auftrennen in einzelne Fraktionen von Gewerbe- und/oder Haushaltsabfall zum Gegenstand.

Sowohl durch den Anstieg der Bevölkerung als auch den wachsenden Wohlstand derselben tritt ein Ansteigen des Haushalts- und Gewerbeabfalles ein. Diese Abfallsorten sind zum Unterschied von Industrieabfällen zwar vorsortiert aber weisen ein Gemisch von Stoffen in hoher Zahl auf. So gelangen Speisereste, und sei es lediglich durch verunreinigte Verpackungsmaterialien, wie Papier, Kunststofffolien aber auch Metalle, beispielsweise über Verpackungen, lediglich Metallwendeln und Gewinde aufweisende Glühbirnen, Verbundfolien, die aus Kunststoff und einer Metallschichte, zumeist Aluminium und Papier, aufgebaut sind, Fäkalien, beispielsweise über Zellstoffwindeln, in diese Abfallgemische. Derartige Abfälle sind in der Regel nicht unmittelbar einer umweltschonenden Deponierung zuzuführen.

In Ballungszentren werden derartige Restabfallmengen einer Verbrennung zugeführt, wobei das Volumen ca. um 90 % und das Gewicht ca. um 70 % reduziert werden kann. Bei der Verbrennung müssen sowohl die Abgase als auch die verbleibenden Aschen, bevor eine Endlagerung durchgeführt werden kann, einer Nachbehandlung unterzogen werden. Unter der Voraussetzung, daß die bei der Verbrennung anfallende Abwärme einer Verwertung zugeführt werden kann, entsteht im wesentlichen dabei keine zusätzliche Belastung der Umwelt, sei es durch CO₂ oder anderen gasförmigen Schadstoffen.

Für die Verbrennung von Abfall ist es erforderlich, denselben zu transportieren, so daß das Einzugsgebiet einer Verbrennungsanlage limitiert ist. Da jedoch anfallende Abfälle nicht ohne Vorbehandlung einer Deponierung zugeführt werden können, um nicht erforderliche Umweltbelastungen zu vermeiden, müssen derartige Abfälle einer Vorbehandlung unterworfen werden.

Der vorliegenden Erfindung ist zur Aufgabe gestellt, ein Verfahren zum Behandeln von Abfallstoffen zu schaffen, das erlaubt, verwertbare Wertstoffe, wie Metalle, energetisch hochwertige Stoffe, vererdungsfähige Produkte, abzutrennen, geruchsmäßige Belastung während der Deponierung der Abfallstoffe zu vermeiden und Schwermetalle abzuscheiden.

Das erfindungsgemäße Verfahren zum physikalischen und chemischen Behandeln sowie Auftrennen in einzelne Fraktionen von Gewerbe- und/oder Haushaltsabfall, wobei vom Abfall gegebenenfalls eine Grobfraktion abgetrennt, und der Abfall mechanisch zerkleinert wird, besteht im wesentlichen darin, daß vom zerkleinerten Abfall ferro-, dia- und paramagnetische metallische Stoffe, insbesondere mit Magnet- und Wirbelstromabscheider, abgeschieden werden, und der Abfall, gegebenenfalls unter Wasser-, Nährstoff- und/oder Mikroorganismenzugabe, einer aeroben Fermentation zugeführt, die fermentierten Abfälle in eine wäßrige Suspension übergeführt, eine aufschwimmbare Leichtfraktion sowie eine sedimentierbare Grobfraktion abgetrennt, von der verbleibenden Suspension Feststoffe abgeschieden und eine fluide, insbesondere eine flüssige, Phase einer anaeroben Fermentation zugeführt wird.

Die Abtrennung von Grobfraktionen aus einem Abfall stellt sicher, daß keine unerforderliche Vermischung von an sich einheitlichen Stoffen mit dem Stoffgemisch, wie sie bei Abfällen vorliegen, durchgeführt wird, so daß diese Grobstoffe einer getrennten Weiterbehandlung zugeführt werden können, wobei weiters die Energie für allfällige Zerkleinerungsarbeiten, welche um so größer ist, je kleiner die Zerkleinerung stattfindet, eingespart werden kann. Eine mechanische Zerkleinerung der Abfallstoffe ermöglicht eine wesentlich bessere physikalische als auch chemische Auftrennung der Abfallstoffe. Um zu vermeiden, daß die metallischen Abfallstoffe während der Behandlung des Abfalles in Lösung gehen und sodann erneut abgeschieden werden müssen, werden dieselben vor der weiteren Verfahrensdurchführung abgetrennt. Die magnetische Abscheidung von ferromagnetischen Stoffen sowie die Wirbelstromabscheidung von dia- und paramagnetischen Stoffen stellt ein bewährtes Verfahren dar, so daß sichergestellt werden kann, eine im wesentlichen quantitative Abscheidung der Metalle zu erreichen. Der verbleibende Abfall wird sodann je nach Erfordernis mikrobiologisch abgebaut, so daß allfällige später bei einer Deponie stattfindenden mikrobiologischen Abbau bereits vorgegriffen wird. Insbesondere werden die in lösliche Form überführbare Schadstoffe in Lösung gebracht, die sodann durch Suspendierung der zerkleinerten Abfälle in eine wäßrige Phase übergehen. Die danach gewinnbaren Feststoffe sind im wesentlichen frei von Schadstoffen und können einer Vererdung, also nicht einer Deponierung, zugeführt werden. Bei der wäßrigen Suspension liegen weiters sedimentierbare und aufschwimmbare Feststoffe vor, wobei die aufschwimmbare Leichtfraktion kohlenstoffreich und daher einer thermischen Verwertung zugeführt werden kann, wohingegen die sedimentierbare Fraktion im wesentlichen aus mineralischen Grobstoffen besteht, die unlösliche Schadstoffe aufweisen können, so daß eine direkte Deponierung zweckmäßig ist. Das nach der Abtrennung aus der Suspension verbliebene Fluid, welches auch gegebenenfalls Feststoffe aufweisen kann, wird einer anaeroben Fermentation zugeführt, wobei einerseits durch die schwefelhaltigen Eiweißstoffe Merkaptane und Schwefelwasserstoffe gebildet werden, welche die in Lösung befindlichen Schwerstoffe als Sulfide ausfällen und andererseits verhindern, daß bei der Deponierung von aus der Lösung zu gewinnenden Feststoffen eine weitere anaerobe Fermentation, welche Geruchsbelästigungen verursacht und damit Filter und dgl. bedingt, verhindert werden kann. Weiters weist der Klärschlamm einer anaeroben Fermentation lediglich 5 Gew.-% jener einer aeroben Fermentation auf.

Werden die aerob fermentierten Abfälle sowohl im sauren und, insbesondere darauffolgend, im alkalischen Bereich extrahiert, so kann eine besonders rasche und quantitativ hohe Aufnahme von Schadstoffen in die Extraktionsflüssigkeit erfolgen.

Wird die aerobe Fermentation bei einer gegenüber der Raumtemperatur erhöhten Temperatur, insbesondere bei 60°C bis 70°C, durchgeführt, so kann der Fermentationsprozeß beschleunigt erfolgen.

Wird die anaerobe Fermentation im neutralen bis alkalischen Bereich, insbesondere bei einem pH-Wert von 7 bis 10, durchgeführt, so kann eine besonders hohe quantitavie Abscheidung der Schwermetalle als Sulfide erreicht werden.

Werden aus der flüssigen Phase nach der anaeroben Fermentation Schwermetalle, insbesondere mit Flockungsmittel, z. B. Eisendreihydroxid, abgetrennt, und wird mit der flüssigen Phase der zerkleinerte, fermentierte Abfall suspendiert, so wird einerseits eine Abscheidung der Schwermetalle selbst in kollidaler Form besonders wirksam erreicht, wobei andererseits ein Kreislauf des von Schadstoffen abgereicherten Wassers durchgeführt werden kann.

Werden die bei der anaeroben Fermentation generierten Gase einer energetischen Verwertung, insbesondere zur Erwärmung der Suspension, durchgeführt, so kann eine zusätzliche Belastung der Umwelt durch Generieren von CO₂ vermieden werden, da diese verbrennbaren Gase spätestens während einer anaeroben Fermentation in einer Deponie aufgetreten wären.

Werden die Feststoffe der verbleibenden Suspension einer Vererdung zugeführt, so kann eine unnötige Vergrößerung der Deponiemengen vermieden werden, wobei weiters gegebenenfalls auch Spurenelemente, wie beispielsweise Zink, dem Erdreich zuführbar sind.

Wird die aufschwimmende Festfraktion entwässert und einer energetischen Verwertung zugeführt, so kann bei fermentierbaren Stoffen eine geruchsbelästigende Fermentation im anaeroben Bereich vermieden werden und weiters bei energiereichen Stoffen sichergestellt sein, daß dieselben nicht ohne Ausnutzung des Energiepotentials einer Deponierung zugeführt werden.

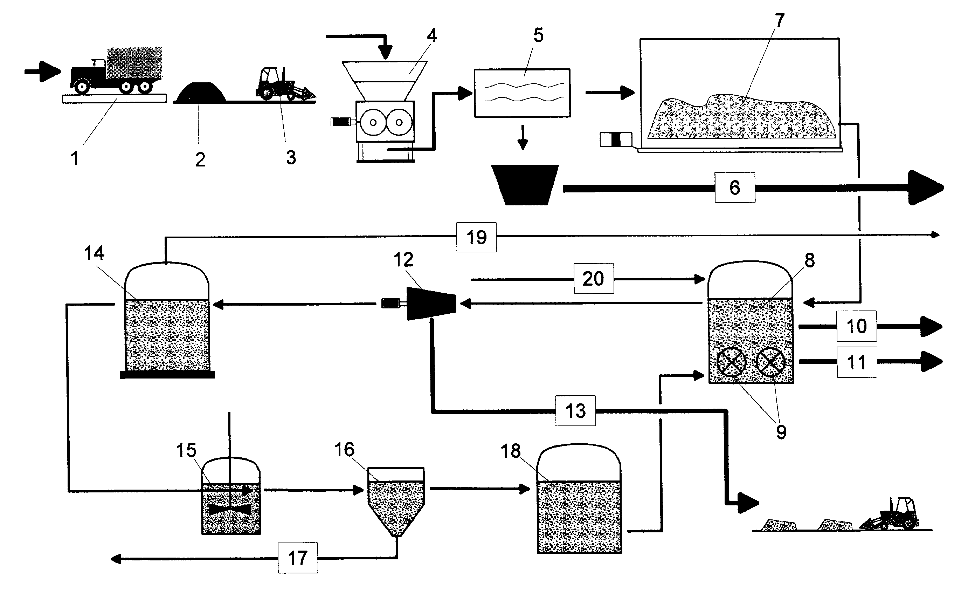

Im folgenden wird die Erfindung anhand der Zeichnung und eines Beispiels, bei dem das den großtechnischen Schritten entsprechende Verfahren in einem Technikum durchgeführt wurde, näher erläutert.

100 kg einer Mischung aus Haus- und Gewerbeabfall mit einer Zusammensetzung in Gew.-%

| | |
|---|---|
| Papier und Pappe | 24,00 % |
| Verbundstoffe | 4,00 % |
| Glas | 6,00 % |
| Kunststoff-Formkörper | 3,00 % |
| Kunststoff-Folien | 3,00 % |
| Metalle | 5,00 % |
| Holz, Leder, Gummi | 5,00 % |
| Textilien | 2,00 % |
| mineral. Bestandteile | 14,00 % |
| Biomaterial | 31,00 % |
| Problemstoffe | 1,00 % |
| Reststoffe | 2,00 % |

werden über Straßenfahrzeuge 1 zur Anlage verbracht. Nach der Ablagerung desselben findet eine Zwischenlagerung in einem Flachbunker 2 statt, in welchem im wesentlichen keine biochemische Umsetzung erfolgt. Über ein Ladegerät 3 wird die Mischung des Abfalles einem Shredder 4 zugeführt. Von dem so auf eine Größe von maximal 250 mm zerkleinerte Abfall wird in der Metallabscheidung 5, welcher eine Magnetabscheidung und eine Wirbelstromabscheidung aufweist, Eisen und Nichteisenmetalle abgeschieden, von den in metallischer Form vorliegenden Komponenten befreit (4 Gew.-%). Diese Fraktion aus Eisen und Nichteisenmetallen wird gemäß Pfeil 6 einer stofflichen Verwertung zugeführt.

Der zerkleinerte Abfall, welcher von Metallen im wesentlichen befreit wurde, wird in einer Mobilisierungsrotte 7 einer vierundzwanzig Stunden dauernden aeroben Fermentation mit einer Temperatur bis 60°C unterworfen. Eine Zugabe von Nährstoffen, Wasser und Mikroorganismen war nicht erforderlich. Die zugeführte Luft mit 60°C war mit Wasserdampf gesättigt. Die verbliebenen Schwermetalle wurden in eine lösliche Form übergeführt. Diese Stoffe werden sodann in einer Naßaufbereitung 8 mit Wasser, das im Kreislauf geführt ist, vermischt, wobei ein Verhältnis von Feststoffen zu Wasser von 8 - 10 : 92 - 90 eingehalten wird. In der Naßaufbereitung 8 sind Mischorgane 9 vorgesehen, welche für eine Durchmischung der aus der Mobilisierungsrotte 7 kommenden Stoffe mit dem Wasser, u. zw. vorerst bei einem pH-Wert 4 und sodann mit einem pH-Wert 9 und 70°C, Sorge tragen. Die aufschwimmenden Stoffe, also die Leichtfraktion 22,0 Gew.-%, werden mit einem Rechen an der Oberfläche abgezogen und gemäß Pfeil 10 einer energetischen Verwertung zugeführt. Die in der Naßaufbereitung 8 absinkenden Feststoffe (65,0 Gew.-%) werden ebenfalls abgezogen und einer direkten Deponierung gemäß Pfeil 11 zugeführt. Die aus der Naßaufbereitung 8 abgezogene Suspension wird in einer Zentrifuge 12 entwässert. Die Feststoffe 5 Gew.-% zusätzlich mit einem Gehalt von ca. 50 Gew.-% Wasser werden gemäß Pfeil 13 einer Vererdung zugeführt. Die schadstoffbelastete Flüssigkeit, welche zusätzlich auch organische Nährstoffe enthält, wird dem Anaerobreaktor 14 zugeführt, in welchem der pH-Wert, so erforderlich, mit NaOH auf 9 eingestellt wird und eine anaerobe Fermentation über zwölf Stunden bei Raumtemperatur stattfindet, bei welcher Schwefelwasserstoff und Merkaptane entstehen, welche die Schwermetalle als Sulfide ausfällen. Gleichzeitig entstehen brennbare Gase, insbesondere Methan, die gemäß Pfeil 19 einer energetischen Verwertung im Verfahren zur Erwärmung der Suspension in der Naßaufbereitung auf 60°C bis 70°C dient. Diese feinteiligen Sulfide werden in der Flockungskammer 15 von ausgefälltem Eisendreihydroxid inkludiert und in der Sedimentationskammer 16 durch Schwerkraft abgeschieden. Die so abgeschiedenen Schwermetalle (4 Gew.-%, welche auch teilweise im Abfall in löslicher Form vorlagen) samt Schlamm werden gemäß Pfeil 17 einer Nachbehandlung und anschließenden Deponierung zugeführt. Die Flüssigkeit aus der Sedimentationskammer 16 wird einer nicht dargestellten Wasseraufbereitung zugeführt, und das so gereinigte Wasser über den Prozeßwasserpuffer 18 gelangt in die Naßaufbereitung 8. Allfälliger zusätzlicher Bedarf an Wasser wird durch Frischwasserzufuhr in die Naßaufbereitung 8 gemäß Pfeil 20 gedeckt.

Das Verfahren wurde diskontinuierlich durchgeführt, kann jedoch auch kontinuierlich durchgeführt werden, wobei die aerobe Fermentation mit einem Wanderrost, die Extraktion und anaerobe Fermentation, Fällung und Zentrifugieren im Durchlaufverfahren durchzuführen ist.

## Patentansprüche

1. Verfahren zum physikalischen und chemischen Behandeln sowie Auftrennen in einzelne Fraktionen von Gewerbe- und/oder Haushaltsabfall, wobei vom Abfall gegebenenfalls eine Grobfraktion abgetrennt, und der Abfall mechanisch zerkleinert wird, **dadurch gekennzeichnet, daß** vom zerkleinerten Abfall ferro-, dia- und paramagnetische metallische Stoffe, insbesondere mit Magnet- und Wirbelstromabscheider, abgeschieden werden, und der Abfall, gegebenenfalls unter Wasser-, Nährstoff- und/oder Mikroorganismenzugabe, einer aeroben Fermentation zugeführt, die fermentierten Abfälle in eine wäßrige Suspension übergeführt, eine aufschwimmbare Leichtfraktion sowie eine sedimentierbare Grobfraktion abgetrennt, von der verbleibenden Suspension Feststoffe abgeschieden und eine fluide, insbesondere eine flüssige, Phase einer anaeroben Fermentation zugeführt wird.

2. Verfahren nach Anspruch 1, **dadurch gekennzeichnet, daß** die aerob fermentierten Abfälle sowohl im sauren und, insbesondere darauffolgend, im alkalischen Bereich extrahiert werden.

3. Verfahren nach einem der Ansprüche 1 oder 2, **dadurch gekennzeichnet, daß** die aerobe Fermantation bei einer gegenüber der Raumtemperatur erhöhten Temperatur, insbesondere bei 60°C bis 70°C, durchgeführt wird.

4. Verfahren nach Anspruch 1, 2 oder 3, **dadurch gekennzeichnet, daß** die anaerobe Fermentation im neutralen bis alkalischen Bereich, insbesondere bei pH-Wert 7 bis 10, durchgeführt wird.

5. Verfahren nach einem der Ansprüche 1 bis 4, **dadurch gekennzeichnet, daß** aus der flüssigen Phase nach der anaeroben Fermentation Schwermetalle, insbesondere mit Flockungsmittel, z. B. Eisendreihydroxid, abgetrennt werden, und mit der flüssigen Phase der zerkleinerte, fermentierte Abfall supendiert wird.

6. Verfahren nach einem der Ansprüche 1 bis 5, **dadurch gekennzeichnet, daß** die bei der anaeroben Fermentation generierten Gase einer energetischen Verwertung, insbesondere zur Erwärmung der Suspension, zugeführt werden.

7. Verfahren nach einem der Ansprüche 1 bis 6, **dadurch gekennzeichnet, daß** die Feststoffe der verbleibenden Suspension einer Vererdung zugeführt werden.

8. Verfahren nach einem der Ansprüche 1 bis 7, **dadurch gekennzeichnet, daß** aufschwimmbare Festfraktion entwässert und einer energetischen Verwertung zugeführt wird.
